# EUROPEAN PATENT APPLICATION

(11) **EP 3 276 173 A1**
(43) Date of publication of application: **31.01.2018**
(21) Application number: 17183333.8
(22) Date of filing: 26.07.2017
(51) Int. Cl.: F04B 27/04, F04B 27/08, F04B 27/10, F04B 35/01, F04B 39/12, F16J 15/3232

(54) **REFRIGERANT SHAFT SEAL AND OPEN REFRIGERANT COMPRESSOR EQUIPPED WITH REFRIGERANT SHAFT SEAL**

(30) Priority: 27.07.2016 JP 2016147285
(71) Applicant: Mitsubishi Heavy Industries Thermal Systems, Ltd., Tokyo 108-8215 (JP)
(72) Inventor: SATO, Hajime, TOKYO, 108-8215 (JP); MIYAMOTO, Yoshiaki, TOKYO, 108-8215 (JP); MIZUNO, Hisao, TOKYO, 108-8215 (JP); NOGUCHI, Akihiro, NAGOYA-SHI, AICHI, 453-0862 (JP); GOTO, Takashi, NAGOYA-SHI, AICHI, 453-0862 (JP); SHIKANAI, Toshiyuki, NAGOYA-SHI, AICHI, 453-0862 (JP); GOTO, Shusaku, NAGOYA-SHI, AICHI, 453-0862 (JP)
(74) Representative: Intès, Didier Gérard André

(57) **Abstract**

Provided is a refrigerant shaft seal which can prevent both leakage of a refrigerant gas and suction of outside air with certainty. A lip seal 9 includes: a first seal lip L1 and a second seal lip L2 where an inner peripheral seal portion 31, 32 is positioned more on an inner side of a housing 2 in a drive shaft direction than a fixed portion 35, 42; and a third seal lip L3 where the inner peripheral seal portion 33 is positioned more on an outer side of the housing 2 in the drive shaft direction than a fixed portion 43. A lubricant oil retaining space OS is formed between the second seal lip L2 and the third seal lip L3. A straining force F3 is set weaker than a straining force F2.

## Description

### BACKGROUND OF THE INVENTION

### 1. FIELD OF THE INVENTION

The present invention relates to a refrigerant shaft seal which is provided to a portion of an open refrigerant compressor through which a drive shaft projects from a housing. To be more specific, the present invention relates to a refrigerant shaft seal which can prevent both leakage of a refrigerant gas from the inside of a housing to an atmospheric side and suction of outside air into the inside of the housing from the atmospheric side with certainty, and to an open refrigerant compressor equipped with the refrigerant shaft seal.

### 2. DESCRIPTION OF RELATED ART

In a refrigerant compressor (compressor) which compresses a refrigerant gas in a chilling system for a refrigerated/chilled transportation truck, a vehicle air conditioner or the like, a compression mechanism is housed in a housing made of an aluminum alloy or the like, a drive shaft for driving the compression mechanism projects from one surface of the housing, and a pulley with an electromagnetic clutch which is mounted on the projecting portion of the drive shaft is driven by an engine or the like by way of a belt. Such a refrigerant compressor is referred to as an open refrigerant compressor since a shaft hole which allows the drive shaft to project therethrough is formed in the housing of the compressor. On the other hand, a refrigerant compressor where a compression mechanism and a drive motor are incorporated in the inside of a hermetically sealed pressure container is referred to as a hermetic refrigerant compressor.

In an open refrigerant compressor, a projecting portion of a drive shaft, or, a shaft hole of a housing, is provided with a lip seal (an oil seal with a lip) shown in FIG. 2 of Patent document 1, FIG. 3 of Patent document 2 or similar, for example. Accordingly, a refrigerant gas and lubricant oil (refrigerant oil) mixed into the refrigerant gas in the housing are prevented from leaking through the shaft hole to an atmospheric side.

These lip seals include a first lip made of rubber and a second lip made of a resin. As a resin material for forming the second lip, polytetrafluoroethylene (PTFE) is used. Each of both the first lip and the second lip has a cross-sectional shape where an inner peripheral portion is inclined with respect to an outer peripheral portion toward the inside of a housing. A seal portion of an inner peripheral distal end of the inner peripheral portion is brought into slide contact with an outer peripheral surface of a drive shaft with an appropriate straining force.

The first lip is provided mainly for preventing a refrigerant gas in the housing from leaking to an atmospheric side due to a pressure in the inside of the housing. The second lip is provided for preventing outside air from being sucked into the housing when a pressure inside the housing becomes negative during operation.

### PRIOR ART DOCUMENTS

### PATENT DOCUMENTS

Patent document 1: Japanese Unexamined Patent Application, Publication No. 2003-139369
Patent document 2: Japanese Unexamined Patent Application, Publication No. 2008-2356

### BRIEF SUMMARY OF THE INVENTION

However, as described above, the conventional lip seal has a cross-sectional shape where the second lip made of a resin is inclined toward the inside of the housing and hence, resistance against a negative pressure generated in the inside of the housing is not sufficient. Accordingly, when a negative pressure is generated, suction of outside air into the inside of the housing cannot be completely prevented. For this reason, outside air enters the housing so that air is compressed thus giving rise to a problem that a pressure of a refrigerant system may be abnormally increased.

This problem is particularly apparent in an open compressor for use at low temperatures such as an open compressor for a chilling system which may, even in a normal operation, be operated in a negative pressure region. A degree of negative pressure in the inside of the housing is also increased when air is evacuated at the time of filling a refrigerant gas, or when a pump-down operation (which is an operation performed for preventing breakage of the compressor caused by liquid compression, and the operation is performed in such a manner that the refrigerant compressor is driven in a state where the suction port is closed, and the refrigerant gas is discharged from the refrigerant compressor) is performed in a state where an operation of a chilling system, an air conditioning system or the like is stopped. Accordingly, also in such cases, there is a possibility that the above-mentioned problem is caused.

The present invention has been made to solve such a problem, and it is an object of the present invention to provide a refrigerant shaft seal which can prevent both leakage of a refrigerant gas from the inside of a housing to an atmospheric side and suction of outside air into the inside of the housing from the atmospheric side with certainty, and an open refrigerant compressor equipped with the refrigerant shaft seal.

According to one aspect of the present invention, there is provided a refrigerant shaft seal which is mountable on a shaft hole of an open refrigerant compressor through which a drive shaft projects from a housing, the refrigerant shaft seal including: an inner seal lip where, as viewed in a cross-sectional view taken along an axial direction of the drive shaft, an inner peripheral seal portion which is brought into contact with an outer peripheral surface of the drive shaft is positioned more on an inner side of the housing in a drive shaft direction than a fixed portion of the inner seal lip to a shaft hole side; and an outer seal lip where the inner peripheral seal portion thereof is positioned more on an outer side of the housing in the drive shaft direction than a fixed portion of the outer seal lip to the shaft hole side.

According to the refrigerant shaft seal having the above-mentioned configuration, the inner seal lip maintains a pressure in the inside of the housing so that leakage of a refrigerant gas from the inside of the housing to an atmospheric side is prevented. The inner seal lip is formed such that the inner peripheral seal portion is positioned more on the inner side of the housing in the drive shaft direction than the fixed portion of the inner seal lip to the shaft hole side. Accordingly, the more a pressure of a refrigerant gas in the inside of the housing, the more a force to make the inner peripheral seal portion brought into contact with the outer peripheral surface of the drive shaft is increased and hence, a sealing force is increased.

Further, a pressure of the atmosphere outside the housing is shut off by the outer seal lip and hence, suction of outside air into the inside of the housing from the atmospheric side can be prevented. The outer seal lip is formed such that the inner peripheral seal portion is positioned more on the outer side of the housing in the drive shaft direction than the fixed portion of the outer seal lip to the shaft hole side. Accordingly, the more a negative pressure in the inside of the housing, the more a force to make the inner peripheral seal portion brought into contact with the outer peripheral surface of the drive shaft is increased and hence a sealing force is increased.

With such a configuration, in addition to that, as in the conventional technique, the inner seal lip prevents leakage of a refrigerant gas from the inside of the housing to the atmospheric side, the outer seal lip can prevent suction of outside air into the inside of the housing from the atmospheric side when a pressure inside the housing becomes negative.

In the refrigerant shaft seal having the above-mentioned configuration, a lubricant oil retaining space capable of retaining lubricant oil may be formed between the inner seal lip and the outer seal lip.

As described previously, although the inner seal lip prevents leakage of a refrigerant gas from the inside of the housing to the atmospheric side, the inner seal lip allows leakage of an extremely small amount of lubricant oil contained in a refrigerant gas so as to lubricate the inner seal lip per se. The leaked lubricant oil is retained in the lubricant oil retaining space formed between the inner seal lip and the outer seal lip, and the inner seal lip and the outer seal lip are properly lubricated by the retained lubricant oil. With such a configuration, wear of the respective seal lips can be prevented and hence, a favorable sealing performance of the refrigerant shaft seal can be maintained.

In assembling the open refrigerant compressor, lubricant oil such as grease may be sealed in the lubricant oil retaining space in advance. With such a configuration, conformability between the drive shaft and the respective seal lips of the refrigerant shaft seal is improved so that wear of the respective seal lips can be prevented.

In the refrigerant shaft seal having the above-mentioned configuration, a straining force of the outer seal lip may be set weaker than a straining force of the inner seal lip.

As described above, when a straining force of the outer seal lip is set weaker than a straining force of the inner seal lip, lubricant oil which is slightly leaked from the inside of the housing so as to lubricate the refrigerant shaft seal and a foreign material such as sludge (metal wear powder) discharged from the inside of the housing pass through between the outer seal lip and the drive shaft and are discharged to the outside of the housing. Accordingly, it is possible to prevent lubricant oil, sludge or the like from being retained between the plurality of lips of the refrigerant shaft seal for a long period and hence, lubrication failure caused by oxidation degradation of lubricant oil or deposition of sludge can be prevented. For this reason, wear of the respective seal lips can be suppressed and hence, the favorable soundness of the refrigerant shaft seal can be maintained over a long period of time.

In the refrigerant shaft seal having the above-mentioned configuration, an outer periphery fixed portion of the inner seal lip and an outer periphery fixed portion of the outer seal lip are preferably disposed adjacently to each other along the axial direction of the drive shaft.

With such a configuration, a space (lubricant oil retaining space OS) formed between the inner seal lip and the outer seal lip is narrow. Accordingly, an amount of lubricant oil retained in the space is reduced and hence, it is possible to prevent lubrication failure caused by oxidation degradation of lubricant oil retained in such a space whereby wear of the respective seal lips can be prevented.

In the refrigerant shaft seal having the above-mentioned configuration, the inner seal lip and the outer seal lip may differ from each other at least in material, cross-sectional shape, inclination angle with respect to the outer peripheral surface of the drive shaft, contact width of the inner peripheral seal portion, and straining force.

With such a configuration, the inner seal lip and the outer seal lip are allowed to have different sealing characteristics so that it is possible to provide the refrigerant shaft seal which can seal a refrigerant gas and outside air corresponding to wide range of operation conditions.

According to another aspect of the present invention, there is provided an open refrigerant compressor equipped with any one of the above-mentioned refrigerant shaft seals. With such a configuration, it is possible to provide an open refrigerant compressor having the above-mentioned manner of operation and advantageous effects.

As has been described heretofore, according to the refrigerant shaft seal and the open refrigerant compressor equipped with the refrigerant shaft seal of the present invention, it is possible to prevent both leakage of a refrigerant gas from the inside of a housing to an atmospheric side and suction of outside air into the inside of the housing from the atmospheric side with certainty.

### BRIEF DESCRIPTION OF THE SEVERAL VIEWS OF THE DRAWINGS

FIG. 1 is a partial longitudinal cross-sectional view of an open compressor according to one embodiment of the present invention; and
FIG. 2 is a longitudinal cross-sectional view of a refrigerant shaft seal of one embodiment of the present invention showing a part II in FIG. 1 in an enlarged manner.

### DETAILED DESCRIPTION OF THE INVENTION

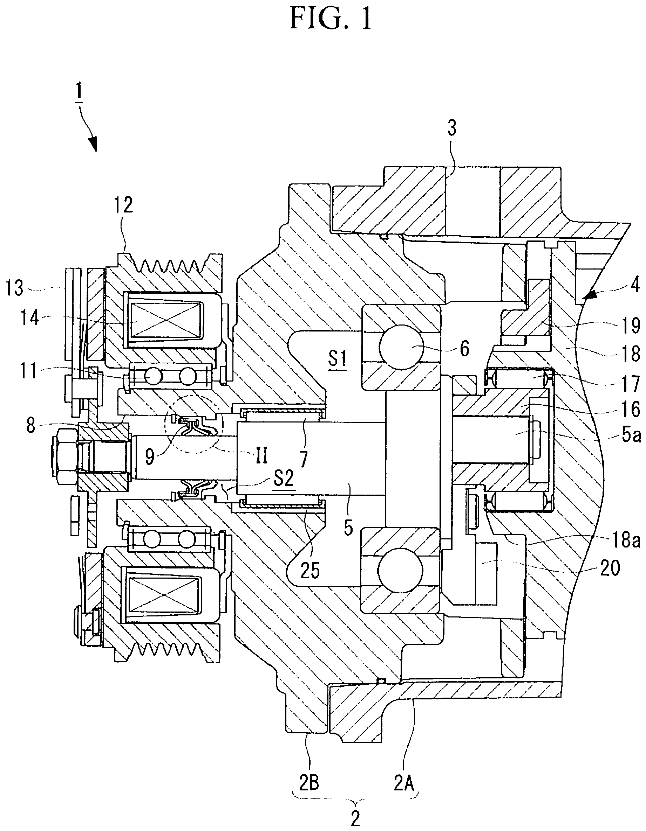

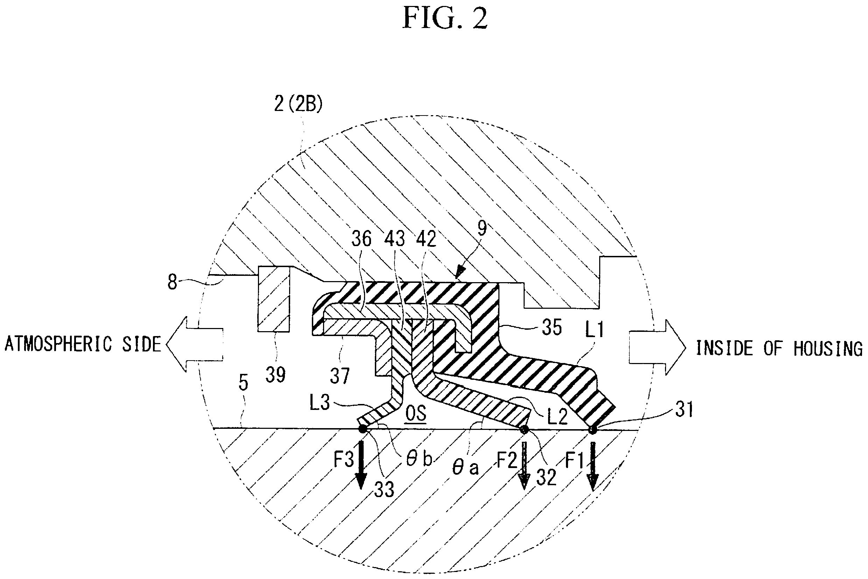

Hereinafter, an embodiment of the present invention is described with reference to FIG. 1 and FIG. 2.

FIG. 1 is a partial longitudinal cross-sectional view of an open scroll compressor (open refrigerant compressor) showing one embodiment of the present invention. The open scroll compressor 1 according to this embodiment is, for example, a compressor for a refrigerated/chilled transportation truck formed such that the open scroll compressor 1 is disposed in the inside of an engine room of an automobile, and is driven by an engine power so as to compresses a refrigerant gas. However, the present invention is not limited to such a compressor, and can be broadly used as an open compressor used for a vehicle air conditioner, air conditioning in living spaces, a refrigerating/chilling system in a store or the like, a heat pump type hot water supply system or the like.

The open scroll compressor 1 includes a substantially cylindrical housing 2 made of an aluminum alloy or the like. The housing 2 is formed of a housing body 2A forming a body, and a housing cover 2B fixed to the housing body 2A by bolts or the like so as to air-tightly close an opening portion formed on one end of the housing body 2A. The other end not shown in the drawing of the housing body 2A is closed.

A scroll compression mechanism 4 and a drive shaft 5 for driving the scroll compression mechanism 4 are housed in an inner space S1 of the housing 2. An outer peripheral surface of the housing 2 has a suction port 3 through which a refrigerant gas before compression is sucked, and a discharge port (not shown in the drawing) through which a refrigerant gas compressed by the scroll compression mechanism 4 is discharged.

The drive shaft 5 is rotatably supported on the housing cover 2B by way of a main bearing 6 and a sub bearing 7. A single row deep groove ball bearing is used as the main bearing 6, for example. A needle bearing is used as the sub bearing 7, for example. One end of the drive shaft 5 passes through a shaft hole 8 formed in the housing cover 2B, and projects to the outside of the housing cover 2B. The sub bearing 7 is press-fitted in the shaft hole 8, and a lip seal 9 (refrigerant shaft seal) according to the present invention is press-fitted in the shaft hole 8 at a position external to the sub bearing 7.

A pulley 12 is rotatably mounted on an outer peripheral portion of a distal end of the housing cover 2B by way of a pulley bearing 11, and a belt (not shown in the drawing) is wound between the pulley 12 and a drive pulley mounted on a drive source not shown in the drawing such as an engine. A clutch plate 13 fixed to a distal end portion of the drive shaft 5 is disposed close to an outer end surface of the pulley 12 in an opposedly facing manner. When an electromagnetic clutch 14 fixed to the housing cover 2B so as to be positioned inside the pulley 12 is energized, the clutch plate 13 is attracted to a pulley 12 side so that the clutch plate 13 is frictionally engaged with the outer end surface of the pulley 12, and rotation of the pulley 12 is transmitted to the drive shaft 5 whereby the drive shaft 5 is rotated.

A crank pin 5a which is eccentrically disposed with respect to a center axis of the drive shaft 5 by a predetermined size is integrally formed on a rear end portion of the drive shaft 5. The crank pin 5a is fitted in a boss 18a formed on a back surface of an orbiting scroll 18 of the scroll compression mechanism 4 by way of a drive bush 16 and a drive bearing 17.

The scroll compression mechanism 4 has a known configuration where the orbiting scroll 18 and a fixed scroll not shown in the drawing are meshed with each other such that a phase of the orbiting scroll 18 and a phase of the fixed scroll are shifted by 180°. When the drive shaft 5 is rotated, the orbiting scroll 18 is driven so as to perform a orbiting motion with respect to the fixed scroll by a function of a rotation preventing mechanism 19. Accordingly, a pair of compression chambers (not shown in the drawing) formed between both scrolls gradually reduces a capacity thereof while being moved toward a center position from an outer peripheral position.

With such a configuration, a refrigerant gas sucked into the inner space S1 of the housing 2 through the suction port 3 is sucked into and compressed by the scroll compression mechanism 4 and, then, is discharged through the discharge port, and is supplied to a condenser and the like not shown in the drawing. A member 20 is a balancer weight.

Lubricant oil (refrigerant oil) is contained in the refrigerant gas at a predetermined rate. Due to the lubricant oil in the form of mist, the respective internal mechanical components such as the main bearing 6, the sub bearing 7, the lip seal 9, the crank pin 5a, the drive bush 16, the drive bearing 17, the rotation preventing mechanism 19, and the scroll compression mechanism 4 are lubricated.

On an inner peripheral surface of the shaft hole 8 into which the sub bearing 7 is press-fitted, a plurality of refrigerant guide grooves 25 are formed equidistantly in a circumferential direction of the shaft hole 8. One end (a right end in the drawing) of each refrigerant guide groove 25 communicates with the inner space S1 of the housing 2, and the other end (a left end in the drawing) of each refrigerant guide groove 25 communicates with a seal space S2 formed between the sub bearing 7 and the lip seal 9. Accordingly, when the open scroll compressor 1 is operated, a refrigerant gas which contains lubricant oil flows from the inner space S1 to the seal space S2 so that the sub bearing 7 and the lip seal 9 are lubricated.

The lip seal 9 is a both-direction shut-off seal which prevents both leakage of a refrigerant gas and lubricant oil from the inside of the housing 2 to an atmospheric side and suction of outside air into the inside of the housing 2 from the atmospheric side. FIG. 2 is a longitudinal cross-sectional view of the lip seal 9 showing a part II in FIG. 1 in an enlarged manner. The lip seal 9 includes three seal lips L1, L2, L3, for example. In the description made hereinafter, the description is made assuming that the first seal lip L1, the second seal lip L2 and the third seal lip L3 are disposed in this order from the inner side of the housing 2 in a drive shaft direction (a right side in FIG. 2).

These seal lips L1, L2, L3 are formed such that inner peripheral seal portions 31, 32, 33 respectively formed on inner peripheral edge portions of the seal lips L1, L2, L3 are brought into contact with an outer peripheral surface of the drive shaft 5 with an appropriate straining force thus providing sealing between the drive shaft 5 and an inner surface of the shaft hole 8. At the same time, these seal lips L1, L2, L3 are always lubricated by lubricant oil contained in a refrigerant gas so that wearing of the seal lips L1, L2, L3 per se is prevented. In this embodiment, these inner peripheral seal portions 31, 32, 33 are respectively brought into contact with the outer peripheral surface of the drive shaft 5 via one line (rib). However, these inner peripheral seal portions 31, 32, 33 may be respectively brought into contact with the outer peripheral surface of the drive shaft 5 via two or more lines (ribs) or via a strip-shaped surface having a predetermined width. Alternatively, the inner peripheral seal portion 31, 32, 33 may respectively have a contact portion having another shape which is considered as a contact portion of the seal lip.

As viewed in a cross-sectional view taken along an axial direction of the drive shaft 5 (see FIG. 2), the first seal lip L1 and the second seal lip L2 are inner seal lips where the respective inner peripheral seal portions 31, 32 are positioned more on an inner side of the housing 2 in the drive shaft direction than fixed portions of the first seal lip L1 and the second seal lip L2 to a shaft hole 8 side (an outer ring portion 35 and an outer periphery fixed portion 42 described later). That is, the first seal lip L1 and the second seal lip L2 are seal lips which are inclined toward the inside of the housing 2 in the axial direction of the drive shaft 5.

The third seal lip L3 is an outer seal lip where the inner peripheral seal portion 33 is positioned more on an outer side of the housing 2 in the drive shaft direction than a fixed portion of the third seal lip L3 to the shaft hole 8 side (an outer periphery fixed portion 43 described later). That is, the third seal lip L3 is a seal lip which is inclined toward the outside of the housing 2 in the axial direction of the drive shaft 5.

Of the three seal lips L1, L2, L3, the first seal lip L1 is positioned on an innermost side of the housing 2. The first seal lip L1 is made of oil resistant rubber (nitrile rubber (NBR) or the like), for example. The outer ring portion 35 embraces annular metal core materials 36, 37 having an L-shaped cross section, the second seal lip L2 and the third seal lip L3 on the inside thereof thus forming an integral body. The outer ring portion 35 of the first seal lip L1 is press-fitted in the shaft hole 8 and is frictionally engaged with the housing 2 so that the whole lip seal 9 is fixed in the inside of the shaft hole 8 and, at the same time, fluid-tight sealing is provided between the inner surface of the shaft hole 8 and the lip seal 9. A member 39 shown in FIG. 2 is an inner periphery circlip provided for preventing an outward displacement of the lip seal 9.

When the second seal lip L2 and the third seal lip L3 are made of the same material as the first seal lip L1, these three seal lips L1, L2, L3 can be formed as an integral body. In this embodiment, however, the second seal lip L2 and the third seal lip L3 are formed separate from the first seal lip L1, and a material for forming the second seal lip L2 and the third seal lip L3 is different from a rubber material used for forming the first seal lip L1. For example, a PTFE resin which is harder than a rubber material is used as a material for forming the second seal lip L2 and the third seal lip L3. A material for forming the second seal lip L2 and a material for forming the third seal lip L3 may differ from each other.

The first to third seal lips L1, L2, L3 respectively have straining forces F1, F2, F3 with respect to the outer peripheral surface of the drive shaft 5. Out of these straining forces F1, F2, F3, the straining force F3 of the third seal lip L3 which is the outer seal lip is set weaker than the straining force F2 of the second seal lip L2 which is the inner seal lip. That is, the relationship F2>F3 is established. On the other hand, a magnitude of the straining force F1 of the first seal lip L1 is desirably set depending on a use environment of the lip seal 9. That is, there may be a case where the straining force F1 of the first seal lip L1 is set larger than the straining forces F2, F3 of other seal lips L2, L3, or a case where the straining force F1 of the first seal lip L1 is set smaller than the straining forces F2, F3 of other seal lips L2, L3.

The second seal lip L2 and the third seal lip L3 respectively include the disc-shaped outer periphery fixed portions 42, 43 which are orthogonal to the axial direction of the drive shaft 5. The outer periphery fixed portions 42, 43 are disposed adjacently to each other in the axial direction of the drive shaft 5 in an overlapping manner. A lip inclination direction of the second seal lip L2 from the outer periphery fixed portion 42 and a lip inclination direction of the third seal lip L3 from the outer periphery fixed portion 43 are opposite to each other so that the seal lip L2 and the seal lip L3 are separated from each other whereby a predetermined space is formed between the second seal lip L2 and the third seal lip L3. The space functions as a lubricant oil retaining space OS capable of retaining lubricant oil contained in a refrigerant gas. As described later, due to the lubricant oil retained in the lubricant oil retaining space OS, lubricity of the respective seal lips L1, L2, L3 is increased.

The second seal lip L2 which is the inner seal lip and the third seal lip L3 which is the outer seal lip may differ from each other in cross-sectional shape, inclination angle θa, θb with respect to the outer peripheral surface of the drive shaft 5, contact width of the inner peripheral seal portion 32, 33 or the like.

In this embodiment, the second seal lip L2 and the third seal lip L3 differ from each other in inclination angle θa, θb with respect to the outer peripheral surface of the drive shaft 5. For example, the inclination angle θa is set to approximately 30°, and the inclination angle θb is set to approximately 45°. The second seal lip L2 and the third seal lip L3 also differ from each other in lip length. The lip length of the third seal lip L3 is set shorter than the lip length of the second seal lip L2.

In the open scroll compressor 1 having the above-mentioned configuration, when the drive shaft 5 is rotated, the scroll compression mechanism 4 sucks a refrigerant gas so that a negative pressure is generated in the inner space S1 of the housing 2. Due to the generation of the negative pressure, the refrigerant gas is introduced into the inner space S1 through the suction port 3. The refrigerant gas is compressed by the scroll compression mechanism 4 thus being formed into a compressed refrigerant gas. The compressed refrigerant gas is discharged through the discharge port formed in the housing 2, and is supplied to demand portions such as the condenser.

With the provision of the lip seal 9, leakage of a refrigerant gas and lubricant oil mixed into the refrigerant gas through between the drive shaft 5 and the inner surface of the shaft hole 8 can be prevented and, at the same time, suction of outside air into the inside of the housing 2 from the atmospheric side can be prevented.

To be more specific, the first seal lip L1 of the lip seal 9 maintains a pressure in the inside of the housing 2 so that leakage of a refrigerant gas from the inside of the housing 2 to the atmospheric side is prevented. The first seal lip L1 is formed such that the inner peripheral seal portion 31 is positioned more on the inner side of the housing 2 in the drive shaft direction than the fixed portion of the first seal lip L1 to the shaft hole 8 side (outer ring portion 35). Accordingly, the more a pressure of a refrigerant gas in the inside of the housing 2 is increased, the more a back surface of the inner peripheral seal portion 31 is pushed to an outer peripheral surface side of the drive shaft 5 and hence, a straining force is increased whereby a sealing force is increased. The inner peripheral seal portion 32 of the second seal lip L2 also prevents leakage of a refrigerant gas from the inside of the housing 2 to the atmospheric side.

On the other hand, a pressure of the atmosphere outside the housing 2 is shut off by the third seal lip L3 and hence, suction of outside air into the inside of the housing 2 from the atmospheric side can be prevented. The third seal lip L3 is formed such that the inner peripheral seal portion 33 is positioned more on the outer side of the housing 2 in the drive shaft direction than the fixed portion of the third seal lip L3 to the shaft hole 8 side (outer periphery fixed portion 43). Accordingly, the more a negative pressure in the inside of the housing 2 is increased, the more a front surface of the inner peripheral seal portion 33 is attracted to the outer peripheral surface side of the drive shaft 5 and hence, a straining force is increased whereby a sealing force is increased. The inner peripheral seal portion 32 of the second seal lip L2 prevents suction of outside air within a certain negative pressure range.

As described above, in addition to that the first seal lip L1 can prevent leakage of a refrigerant gas from the inside of the housing 2 to the atmospheric side, the third seal lip L3 can effectively prevent suction of outside air into the inside of the housing 2 from the atmospheric side when a pressure inside the housing 2 becomes negative. The second seal lip L2 suppresses both leakage of a refrigerant gas and suction of outside air to some extent thus supporting sealing functions of both the first seal lip L1 and the third seal lip L3. In this manner, sealing can be provided between the drive shaft 5 and the inner surface of the shaft hole 8 with certainty.

As described previously, although the first seal lip L1 prevents leakage of a refrigerant gas from the inside of the housing 2 to the atmospheric side, the first seal lip L1 allows leakage of an extremely small amount of lubricant oil contained in a refrigerant gas so as to lubricate the first seal lip L1 per se and other seal lips L2, L3. The leaked lubricant oil is retained in the lubricant oil retaining space OS formed between the second seal lip L2 and the third seal lip L3, and the second seal lip L2 and the third seal lip L3 are properly lubricated by the retained lubricant oil. With such a configuration, wear of the respective seal lips L1, L2, L3 can be prevented and hence, a favorable sealing performance of the lip seal 9 can be maintained.

In assembling the open scroll compressor 1, lubricant oil such as grease may be sealed in the lubricant oil retaining space OS in advance. With such a configuration, conformability between the drive shaft 5 and the respective seal lips L1, L2, L3 is improved so that sealing performance can be increased and, at the same time, wear of the respective seal lips L1, L2, L3 can be prevented.

The straining force F3 of the third seal lip L3 is set weaker than the straining force F2 of the second seal lip L2 and hence, lubricant oil which is slightly leaked from the inside of the housing 2 so as to lubricate the lip seal 9 and a foreign material such as sludge (metal wear powder) discharged from the inside of the housing 2 pass through between the third seal lip L3 and the drive shaft 5 and are discharged to the outside of the housing 2 little by little. That is, lubricant oil which is leaked from the inside of the housing 2 sequentially pushes out lubricant oil retained between the second seal lip L2 and the third seal lip L3 (lubricant oil retaining space OS) to the atmospheric side.

Accordingly, it is possible to prevent lubricant oil and a foreign material such as sludge from being retained between the respective seal lips L1, L2, L3 of the lip seal 9 for a long period and hence, lubrication failure caused by oxidation degradation of lubricant oil or deposition of sludge can be prevented. For this reason, wear of the respective seal lips L1, L2, L3 can be suppressed and hence, the favorable soundness of the lip seal 9 can be maintained over a long period of time.

The outer periphery fixed portion 42 of the second seal lip L2 and the outer periphery fixed portion 43 of the third seal lip L3 are disposed adjacently to each other in the axial direction of the drive shaft in an overlapping manner and hence, the lubricant oil retaining space OS formed between the second seal lip L2 and the third seal lip L3 is narrow. With such a configuration, it is possible to prevent excessive increase of an amount of lubricant oil retained in the lubricant oil retaining space OS. Accordingly, it is possible to prevent lubrication failure caused by oxidation degradation of lubricant oil retained in the lubricant oil retaining space OS for a long time and hence, wear of the respective seal lips L1, L2, L3 can be prevented.

Further, in this embodiment, the first to third seal lips L1, L2, L3 differ from each other in material, cross-sectional shape, inclination angle θa, θb with respect to the outer peripheral surface of the drive shaft 5, and straining force F1, F2, F3. In addition to the above, the first to third seal lips L1, L2, L3 may differ from each other in contact width, contact shape or the like of the inner peripheral seal portion 31, 32, 33. With such a configuration, the respective seal lips L1, L2, L3 are allowed to have different sealing characteristics so that it is possible to provide the lip seal 9 which can seal a refrigerant gas and outside air corresponding to wide range of operation conditions.

As has been described heretofore, according to the lip seal 9 and the open scroll compressor 1 equipped with the lip seal 9 of this embodiment, both leakage of a refrigerant gas from the inside of the housing 2 to the atmospheric side and suction of outside air into the inside of the housing 2 from the atmospheric side can be prevented with certainty.

The present invention is not limited to the configuration of the above-mentioned embodiment, and changes and modifications may be made. Embodiments obtained by making changes and modifications also fall within the scope of the present invention.

For example, a basic internal structure, a positional relationship between parts and the like of the open scroll compressor 1 are not necessarily equal to a basic internal structure, a positional relationship between parts and the like of the open scroll compressor 1 of this embodiment. Further, in place of a scroll-type refrigerant compression mechanism, it may be possible to use a refrigerant compression mechanism of another type such as a rotary-type refrigerant compression mechanism, a vane-type refrigerant compression mechanism, a swash plate refrigerant compression mechanism.

The lip seal 9 is formed such that each of the first to third seal lips L1, L2, L3 applies a straining force to the outer peripheral surface of the drive shaft 5 by elasticity (bending property) of a material for forming the first to third seal lip L1, L2, L3 per se. However, it may be possible to adopt a configuration where a garter spring which biases the respective seal lips L1, L2, L3 to the inner side in a radial direction is mounted on an outer peripheral side of the respective seal lips L1, L2, L3, and a straining force of each seal lip is increased by the tension of the garter spring.

### Reference Signs List

1 open scroll compressor (open refrigerant compressor)
2 housing
5 drive shaft
8 shaft hole
9 lip seal (refrigerant shaft seal)
31, 32, 33 inner peripheral seal portion
35 outer ring portion (fixed portion to shaft hole side)
42, 43 outer periphery fixed portion (fixed portion to shaft hole side)
F1 straining force of first seal lip
F2 straining force of second seal lip
F3 straining force of third seal lip
L1 first seal lip (inner seal lip)
L2 second seal lip (inner seal lip)
L3 third seal lip (outer seal lip)
OS lubricant oil retaining space
θa inclination angle of second seal lip with respect to outer peripheral surface of drive shaft
θb inclination angle of third seal lip with respect to outer peripheral surface of drive shaft

## Claims

1. A refrigerant shaft seal (9) which is mountable on a shaft hole (8) of an open refrigerant compressor (1) through which a drive shaft (5) projects from a housing (2), the refrigerant shaft seal (9) comprising:
an inner seal lip (L2) where, as viewed in a cross-sectional view taken along an axial direction of the drive shaft (5), an inner peripheral seal portion (32) which is brought into contact with an outer peripheral surface of the drive shaft (5) is positioned more on an inner side of the housing (2) in a drive shaft (5) direction than a fixed portion (42) of the inner seal lip (L2) to a shaft hole (8) side; and
an outer seal lip (L3) where the inner peripheral seal portion (33) thereof is positioned more on an outer side of the housing (2) in the drive shaft (5) direction than a fixed portion (43) of the outer seal lip (L3) to the shaft hole (8) side.

2. The refrigerant shaft seal according to claim 1, wherein
a lubricant oil retaining space (OS) capable of retaining lubricant oil is formed between the inner seal lip (L2) and the outer seal lip (L3).

3. The refrigerant shaft seal according to claim 1 or 2, wherein
a straining force (F3) of the outer seal lip (L3) is set weaker than a straining force (F2) of the inner seal lip (L2).

4. The refrigerant shaft seal according to any one of claims 1 to 3, wherein
an outer periphery fixed portion (42) of the inner seal lip (L2) and an outer periphery fixed portion (43) of the outer seal lip (L3) are disposed adjacently to each other along the axial direction of the drive shaft (5).

5. The refrigerant shaft seal according to any one of claims 1 to 4, wherein
the inner seal lip (L2) and the outer seal lip (L3) differ from each other at least in material, cross-sectional shape, inclination angle (θa, θb) with respect to the outer peripheral surface of the drive shaft (5), contact width of the inner peripheral seal portion (32, 33), and straining force (F2, F3).

6. An open refrigerant compressor (1) equipped with the refrigerant shaft seal (9) according to any one of claims 1 to 5.
